# EUROPEAN PATENT SPECIFICATION

(11) **EP 3 341 565 B1**
(45) Date of publication and mention of the grant of the patent: **24.02.2021**
(21) Application number: 15801969.5
(22) Date of filing: 18.11.2015
(51) Int. Cl.: E21B 49/08, G01N 1/20

(54) **LIQUID SAMPLING CONTAINER WITH INTERNAL MIXER**
FLÜSSIGKEITSPROBENAHMEBEHÄLTER MIT INNENMISCHER
RÉCIPIENT D'ÉCHANTILLONNAGE DE LIQUIDE À MÉLANGEUR INTERNE

(30) Priority: 27.08.2015 US 201514837938
(43) Date of publication of application: 04.07.2018
(73) Proprietor: Saudi Arabian Oil Company, Dhahran 31311 (SA)
(72) Inventor: HASSELL, James Clyde, Dhahran 31311 (SA)
(74) Representative: Fish & Richardson P.C.
(86) International application number: PCT/US2015/061239
(87) International publication number: WO 2017/034599

(56) References cited:
- EP-A2- 0 405 475
- US-A- 4 463 599

## Description

### CLAIM OF PRIORITY

This application claims priority to U.S. Patent Application No. 14/837,938 filed on August 27, 2015.

### TECHNICAL FIELD

This specification relates to fluid sampling containers, for example, containers for sampling hydrocarbons recovered from a hydrocarbon reservoir, hydrocarbon pipeline, refining process, or fiscal sales point.

### BACKGROUND

Hydrocarbons trapped in hydrocarbon reservoirs can be recovered using wellbores formed through the hydrocarbon reservoirs. The hydrocarbons recovered from the reservoirs are tested, for example, at different times during production, stabilization, processing, and custody transfer. In this manner, properties of the recovered hydrocarbons, for example, chemical composition, volume fractions, or other properties, can be determined. Such tests are conducted in laboratories that are often at locations different from locations of the wellbores, transmission pipelines, processing plants, or sales points. Therefore, a hydrocarbon sample recovered from a sample collection point is transported to the laboratory for testing. The properties of the sample may change during transportation. For example, non-miscible fluids suspended in the collected sample may separate and heavier density miscible phases may stratify. In such instances, the collected sample will no longer produce laboratory sub-samples that accurately represent the properties of the sample from the collection point.
US 4463599 A describes a sample collection system which includes a free water volume analyzer.
EP 0405475 A2 describes a liquids sampling apparatus which can be connected to a processing or filling conduit.

### SUMMARY

The present invention is defined by the claims.

This specification describes technologies relating to a liquid sampling container with an internal mixer.

Certain aspects of the subject matter described here can be implemented as a fluid sampling container. The container includes a sealed outer body configured to hold a sample multi-phase fluid obtained from a multi-phase fluid stream. An inlet line is attached to the outer body. The sample multi-phase fluid flows into the sealed outer body through the inlet line. A piston assembly is positioned within the sealed outer body. The piston assembly is sealed to the inner walls of the outer body to define a sample volume in which the sample multi-phase fluid is contained. A shear mixer is positioned within the sealed outer body. The shear mixer includes a rotor and a stator arranged to define a fluid passage and rotatable relative to each other. The rotor includes a rotary shear blade configured to shear the sample multi-phase fluid such that a homogeneity of multiple phases in the sample multi-phase fluid remains substantially constant.

This, and other aspects, can include one or more of the following features. The piston assembly can include a front axial end and a rear axial end. The front axial end can be nearer to the inlet line than the rear axial end. The shear mixer can be positioned between the front axial end and the inlet line. The stator can be a hollow, stationary stator within which the rotary shear blade can be positioned. The rotor is rotatable to rotate the rotary shear blade within the hollow, stationary stator. A drive shaft can rotate the rotary shear blade. The drive shaft can pass through the piston assembly and can extend outside the outer body. The stator can include a mesh screen attached to a circumferential surface of the stator. The sample multi-phase fluid sheared by the rotary shear blade in the fluid passage can exit the shear mixer through the mesh screen. A position of the shear mixer between the piston assembly and the inlet line can be adjustable. The position of the shear mixer can be adjustable to be abutted against the front axial end of the piston assembly or be spaced apart from the front axial end of the piston assembly. The piston assembly and the shear mixer can be positioned within a housing. The piston assembly can include a floating piston. A magnetic ring can be attached to a circumference of the floating piston. A magnetic tracker can be attached to an outside surface of the outer body. The magnetic tracker can track a position of the floating piston within the outer body. A temperature detector can be connected to the piston assembly. The temperature detector can determine a temperature of the sample multi-phase fluid and provide the determined temperature as a wireless signal to a display and storage unit. Heating coils can be mounted to an exterior of the sealed outer body. The heating coils can be configured to heat the sample multi-phase fluid. The inlet line can be attached to the outer body through an inlet end cap. An inlet pressure gauge can be connected to the inlet end cap. The inlet pressure gauge can include a wireless transmitter configured to transmit a pressure measured by the inlet pressure gauge. A display unit can be configured to receive and display the pressure transmitted by the wireless transmitter. A purge line can be attached to the outer body. Contents of the sealed outer body can be purged through the purge line before the sample multi-phase fluid flows into the sealed outer body through the inlet line. The multi-phase fluid stream can include hydrocarbons drawn from a hydrocarbon reservoir. The sample multi-phase fluid can include aqueous and hydrocarbon liquids. A controller can be connected to the shear mixer. The controller can be configured to operate the shear mixer to continuously mix the sample multi-phase fluid at mixing conditions at which the homogeneity of multiple phases in the sample multi-phase fluid remains substantially constant over time. The controller can be configured to operate the shear mixer to continuously mix the sample multi-phase fluid at the mixing conditions such that a cumulative distribution of the multiple phases in the sample multi-phase fluid volume remains substantially constant over time. The container, at least partially filled with the sample multi-phase fluid, is portable from a first physical location to a second physical location.

Certain aspects of the subject matter described here can be implemented as a method. A fluid container is at least partially filled with a sample multi-phase fluid drawn from a multi-phase fluid stream. The fluid container includes a sealed outer body configured to hold the sample multi-phase fluid. An inlet line is attached to the outer body. The sample multi-phase fluid flows into the sealed outer body through the inlet line. A piston assembly is positioned within the sealed outer body. The piston assembly is sealed to inner walls of the outer body to define a sample volume in which the sample multi-phase fluid is contained. A shear mixer is positioned within the sealed outer body. The shear mixer includes a rotor and a stator arranged to define a fluid passage and rotatable relative to each other. The rotor includes a rotary shear blade configured to shear the sample multi-phase fluid such that a homogeneity of multiple phases in the sample multi-phase fluid remains substantially constant over time. The shear mixer is operated to mix the sample multi-phase fluid such that a homogeneity of multiple phases in the sample multi-phase fluid remains substantially constant over time.

This, and other aspects, can include one or more of the following features. The fluid container is portable from a first physical location at which the sample multi-phase fluid is collected to a second physical location to which the sample multi-phase fluid is delivered. The shear mixer can be operated to mix the sample multi-phase fluid such that a concentration of each multi-phase component in the sample multi-phase fluid at the first physical location is substantially equal to a concentration of each multi-phase component in the sample multi-phase fluid at the second physical location. The multi-phase fluid stream can include hydrocarbons drawn from a hydrocarbon reservoir. The sample multi-phase fluid can include aqueous and hydrocarbon liquids.

Certain aspects of the subject matter described here can be implemented as a fluid container. The fluid container includes a sealed outer body configured to hold a sample multi-phase fluid drawn from a multi-phase fluid stream at a first physical location for transporting to a second physical location in the fluid container. The fluid container includes a shear mixer positioned within the sealed outer body. The shear mixer includes a rotor and a stator arranged to define a fluid passage and rotatable relative to each other. The rotor includes a rotary shear blade configured to shear the sample multi-phase fluid flowing through the fluid passage. The shear mixer is configured to shear the sample multi-phase fluid such that a homogeneity of multiple phases in the sample multi-phase fluid remains substantially constant while transporting the multi-phase fluid stream from the first physical location to the second physical location.

This, and other aspects, can include one or more of the following features. The fluid container can include a controller connected to the shear mixer. The controller can operate the shear mixer to mix the sample multi-phase fluid such that a concentration of each multi-phase component in the sample multi-phase fluid at the first physical location is substantially equal to a concentration of each multi-phase component in the sample multi-phase fluid at the second physical location. The multi-phase fluid stream can include hydrocarbons drawn from a hydrocarbon reservoir. The sample multi-phase fluid can include aqueous and hydrocarbon liquids.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a schematic diagram of a sample fluid being recovered from a multi-phase fluid stream.
FIGS. 2A-2G are schematic diagrams of a fluid sampling container containing a shear mixer assembly.
FIG. 2H is a schematic diagram of a local display / memory storage unit.
FIGS. 3A-3C are schematic diagrams of a fluid sampling container having a shear mixer abutting a piston assembly.
FIG. 4 is a schematic diagram of a shear mixer spaced apart from a piston assembly.
FIG. 5 is a flowchart of an example of a process for transporting a sample multi-phase fluid in a fluid sampling container.

Like reference numbers and designations in the various drawings indicate like elements.

### DETAILED DESCRIPTION

Changes in pressure or temperature can create compositional changes of the fluids collected in a sample cylinder. Constant pressure sampling containers prevent phase change of fluids from the sample state by maintaining a constant pressure within the cylinder. In instances in which the fluids include volatile materials, such as crude oil, the constant pressure can prevent loss of light end components from the liquid phase while a sample fluid is being held in the sampling container for a sampling period. Crude oil can also be a multi-phase fluid that includes suspensions of aqueous fluids (water-based liquids and vapors), solids (sediment), and hydrocarbon fluids (that is, hydrocarbon-based liquids and vapors). During transportation, for example, from a collection site to a laboratory, the immiscible components and phases will separate, thereby biasing any sub-sample collected from the sampling container.

Certain atmospheric sampling containers include an external motorized pump that circulates the sample using a static mixer to homogenize the sample. However, mixing volatile crude oil under atmospheric conditions can result in loss of light ends, thereby changing the chemical composition of the sample. Proper mixing of the multi-phase, volatile liquids in constant pressure containers under these conditions can minimize or avoid the loss of light ends during sub-sampling at the laboratory. In such containers, separation of immiscible phases (water from oil) does occur, so homogeneity of the multi-phase sample needs to be maintained without compromising the sample integrity, for example, during storage or while transporting the sample between locations.

This specification describes techniques to provide homogeneous mixing of a sample multi-phase fluid carried in a constant pressure fluid sampling container. Implementations of the techniques described here allow sampling multi-phase fluids, for example, volatile multi-phase fluids such as hydrocarbons, directly from a reservoir wellhead or downstream process. The physical state or integrity of the sample multi-phase fluid, for example, the composition of the sample, can be retained. For example, minimal or no change in the physical state or integrity of the sample multi-phase fluid will be observed between sample collection and sample testing at a laboratory. The conditions of the sample multi-phase fluid, for example, volume, temperature, pressure, and other conditions, at the laboratory can be returned to the conditions at the time of sample drawing. In this manner, sample integrity and sample homogenization can simultaneously be maintained by the following: preventing phase change within the sample which compromises mixture integrity; preventing stratification within the sample has the potential to cause erroneous analytical results; returning constant pressure cylinders to the original fluid temperature and pressure of original sampling conditions.

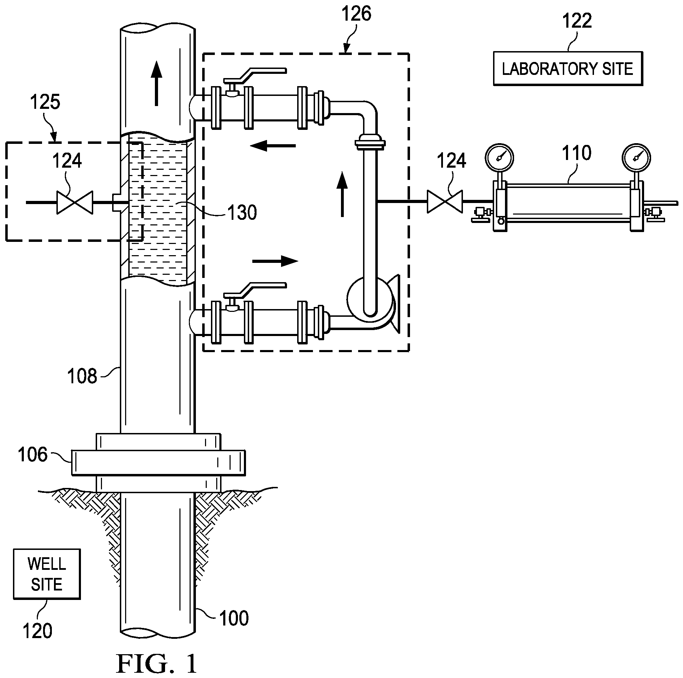

FIG. 1 is a schematic diagram of a sample fluid being recovered from a multi-phase fluid stream. In some implementations, the multi-phase fluid stream is recovered from a pipeline from hydrocarbon service. For example, a wellbore 100 provides the origin of a hydrocarbon transfer pipeline 108. Multi-phase fluids 130 can flow to the surface and can be recovered using pipelines, for example, pipeline 108, connected to the wellhead 106. A sample of the multi-phase hydrocarbons 130 can be collected in a sampling cylinder 110 using a pipeline fast loop 126 or from an inline sample connection 125 operated using a valve 124. The sampling cylinder 110 containing the sample multi-phase fluid can be transported from a first physical location 120, for example, a field location, to a second physical location 122, for example, a laboratory in which the sample multi-phase fluid can be tested.

In the example schematic diagram shown in FIG. 1, the pipeline 108 used to collect the sample multi-phase fluid is shown as being connected to the wellhead 106. In some implementations, the sample can be collected using any pipeline or tank system using a sample collection tap. For example, the pipeline or tank system can be connected to a pipeline such as the pipeline 108 or sampling fast loop 126. Alternatively, the sample collection tap can be installed below the surface. The depth below the surface at which the pipeline or tank system can be installed can be determined by an ability of a user to operate the pipeline or tank system, for example, to operate inlet valves or bleed off backpressure in the fluid sampling container.

The fluid sampling container can be implemented to maintain compositional homogeneity of the multi-phase fluid sample, for example, as the multi-phase fluid sample is transported from a first physical location (for example, the well site 120) to a second physical location (for example, the laboratory 122). Homogeneity of the multi-phase fluid sample is maintained when the percentage of components is equally distributed throughout the sample cylinder volume. Homogeneity is also maintained by preventing any change in distribution of liquid volatile components from flashing to a gaseous state. In the context of a sample transfer, the cumulative distribution of the multi-phase components (for example, the solids, aqueous and hydrocarbon liquids and vapor phase components) obtained at time of collection from the reservoir or process stream under in-situ conditions represents the cumulative distribution of the multi-phase components in the laboratory sub-sample

The fluid sampling container described here maintains homogeneity by mixing (for example, continuously mixing) the multi-phase fluid sample such that aqueous and hydrocarbon droplets are substantially equally sized and substantially equally distributed throughout the cylinder sample volume. The mixing elements described here are internal to the fluid sampling container, thereby eliminating or minimizing the possibility of changes to the volume or composition of the sample that can result when implementing atmospheric external mixing elements, external pressurized mixing elements, or internal mixing elements which change the original volume sample size.

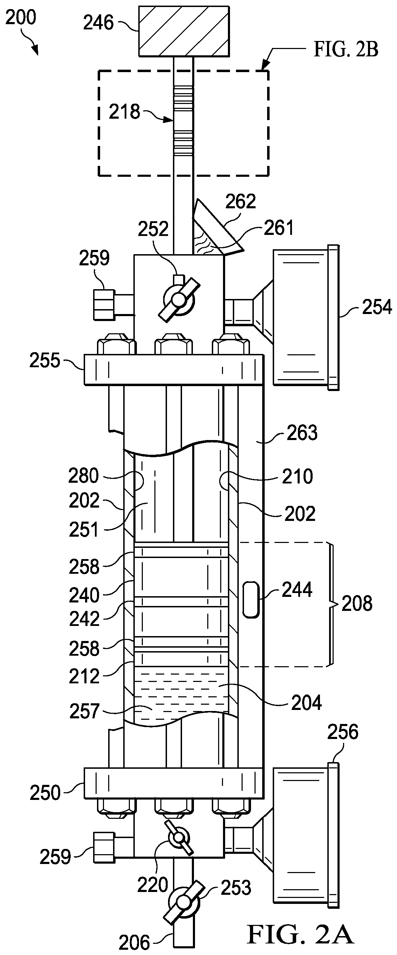

FIG. 2A is a schematic diagram of a fluid sampling container 200. The container 200 includes a sealed outer body 202 configured to hold a sample multi-phase fluid 204 obtained from a multi-phase fluid stream. For example, the multi-phase fluid stream can include hydrocarbons drawn from a hydrocarbon reservoir, hydrocarbon processing plant, refinery, and custody transfer sales point, and the sample multi-phase fluid can include sediment, aqueous liquids and hydrocarbon liquids, and aqueous and hydrocarbon vapor drawn from the pipeline hydrocarbon stream. Additionally, this sampling cylinder offers itself to other situations which require storage or testing of immiscible multiphase fluids, such as use in laboratory calibration standards used for chromatographic analysis, oil-in-water analyses for environmental testing and water-in-oil testing for process monitoring and crude oil fiscal sales.

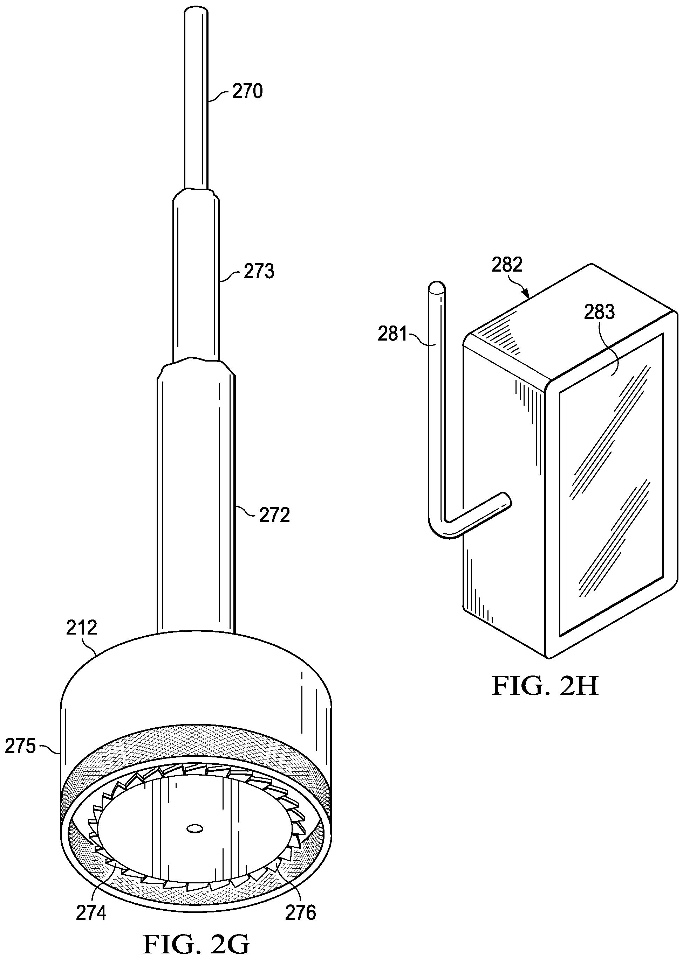

The container 200 includes an inlet line 206 attached to the outer body 202 via the cylinder inlet end cap 250. In some implementations, the outer body 202 can include externally mounted heating coils 280 and controllers for heating the sample cavity. The inlet end cap 250 can include an inlet pressure gauge 256. The inlet pressure gauge 256 can include wireless, analog, battery-powered transmitter with local display / memory storage unit 262. The transmitter can provide data to the local display / memory storage unit 262. The inlet end cap 250 can also include a pressure relief valve 259 for inlet cavity 257. As shown in Fig. 2H, the local display / memory unit 262 can include a transmitter antenna 281, electronic housing 282 and display 283.

The sample multi-phase fluid 204 flows into the sealed inlet cylinder cavity 257 through inlet line 206. Inlet cylinder cavity 257 creates the sample volume in which the sample multi-phase fluid 204 is contained. Prior to sampling, the cylinder piston assembly 208 is forced to the cylinder inlet end cap 250. This is accomplished by venting the volume of the inlet cylinder cavity 257 through inlet line 206 by opening the inlet valve 253 or through the purge valve 220, and by back pressuring the cylinder with an inert gas (such as nitrogen or helium) through back pressure valve 252. Back pressure is maintained in the back pressure cavity by closing the back pressure valve 252. Backpressure can be monitored using back pressure gauge 254. The back pressure gauge 254 can also be a wireless, analog, battery-powered transmitter with local pressure readout. The transmitter can provide measured data to the local display/memory storage unit 262. The outlet end cap 255 can include a pressure relief valve 259 for back pressure cavity 251. The volume of the inlet cylinder cavity 257 resulting between the cylinder piston assembly 208 and cylinder inlet end cap 250 can be purged prior to introducing sample into the cylinder through the sample purge line valve 220.

To fill the cylinder with the sample multi-phase fluid, the backpressure of the back pressure cavity 251 is relieved through backpressure valve 252 until equilibrium pressure is reached through the inlet line 206. At this point, sample will enter inlet cylinder cavity 257 through inlet valve 206 at the process operating pressure of the hydrocarbon pipeline stream. Sample will continue to fill the inlet cylinder cavity until the back pressure valve 252 is closed at approximately 80% of the cylinder total volume.

The container 200 includes a piston assembly 208 positioned within the sealed outer body 202. The piston assembly 208 includes a free floating piston 240 and creates a seal to inner walls 210 of the outer body 202 by O-ring gaskets 258. The piston assembly 208 also separates inlet cylinder cavity 257 from back pressure cavity 251.

In some implementations, a magnetic ring 242 can be attached to a circumference of the floating piston 240. For example, the magnetic ring 242 can surround substantially (for example, all or less than all of) an entirety of the circumference of the floating piston 240. An external magnetic tracker 244 can be attached to an outside surface track 263 on the outer body 202. The magnetic tracker 244 can track the position of the floating piston 240 within the outer body 202 by tracking a position of the magnetic ring 242.

In some implementations, the piston assembly 208 is tracked by the position of the drive shaft 218 attached to the internal floating piston assembly through the cylinder outlet end cap 255 to the back end of the piston cylinder. As shown in FIG. 2A, a position of the drive shaft piston 270 can be determined using a coded piston shaft 218 in combination with a magnetic linear encoder and wireless receiver assembly 261 located on the cylinder which precisely measures the shaft location and generates an output signal indicative of the position and volume displaced by the movement of the piston. The drive shaft piston 270 turns the rotor and is inside the rotating drive shaft 273. The coded piston shaft 218 includes multiple gradations 260 formed (by etching or otherwise) on the outside surface of the coded piston shaft 218 to allow tracking of the drive shaft piston 270 in the cylinder. The signal can be converted and displayed and stored in memory by the local display / memory storage unit 262 out on the cylinder exterior. The shaft is part of the motion sensor system and serves as an information carrier read by the sensor. The motion sensor system may include a motor assembly to extend or retract the drive shaft.

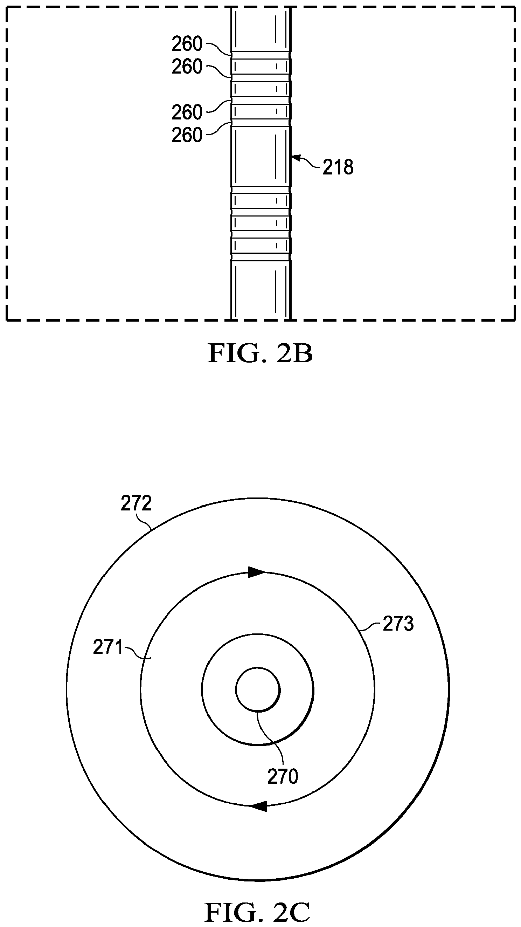

As shown in FIG. 2B, the outer characteristics of the coded piston shaft 218 can include hardened magnetic steel and the information pattern in the form of small grooves or gradations 260 with non-magnetic material encompassing the circumference of the shaft 218. The non-magnetic tracker lines extend the working length of the shaft. As the sample is filling and pushing the piston and shaft assembly through the outlet end cap 255, the shaft position is precisely determined by measurement of the magnetic recorder. A local battery-powered readout and memory storage unit can display the percentage fill, temperature, and pressure of the cylinder 200. Tracking the drive shaft piston position using the techniques described here can allow monitoring and control over the ability of the cylinder to ensure representative sampling. The tracking techniques can also be used to place the shear mixer within the cylinder during the mixing process.

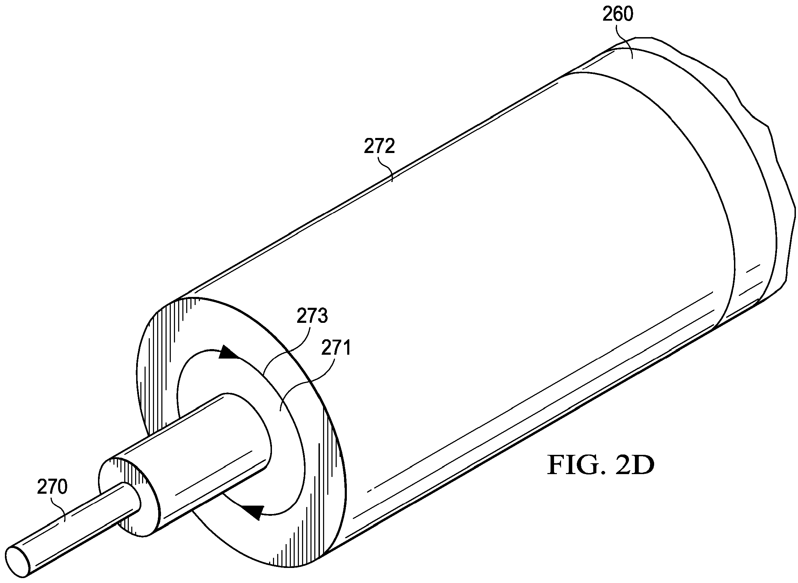

FIGS. 2C and 2D show the interior of the shaft consisting of temperature element 270 terminating in the piston head assembly such as Resistance Temperature Detector (RTD) 2, 3, or 4 wire 100 Ohm sensor capable of high accuracy temperature determination, low friction bearings 271, rotating drive shaft 273 for the shear mixer 212, and magnetic outer shaft 272. The temperature element 270 terminates in the piston head and travels. The RTD may be a wireless battery-powered model providing temperature readout to the local display / memory storage unit 262. FIG. 2D shows the piston assembly. The temperature element 270 can enable maintaining the sample temperature at the same or substantially similar conditions as sampled in the field. As the sample temperature changes, the percentage of components in the liquid and vapor state changes. The ability to monitor the sample temperature allows maintaining the same condition as was observed in the field.

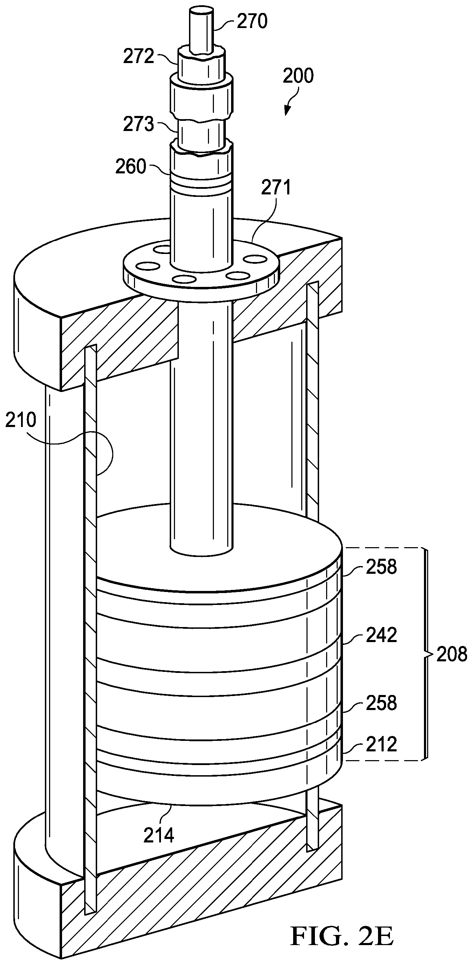

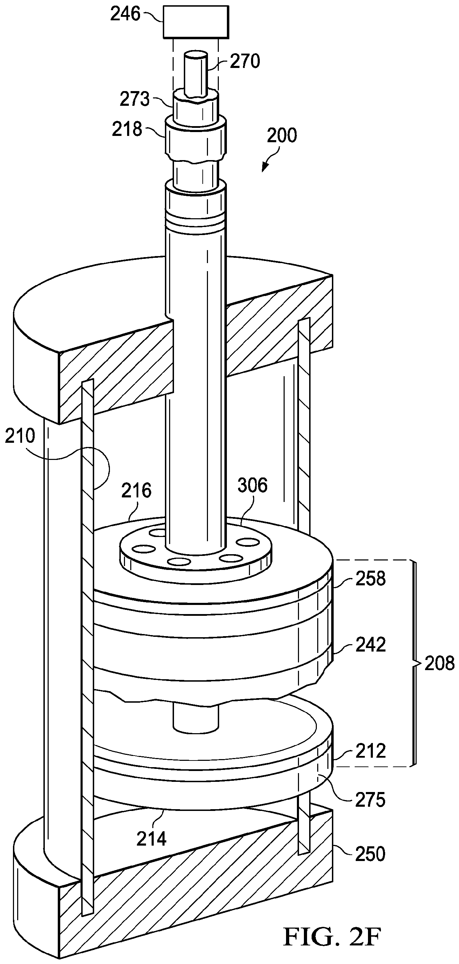

FIGS. 2E and 2F show cut-away views of the container 200 including a shear mixer 212 positioned within the sealed outer body 202. The piston assembly 208 includes a front axial end 214 and a rear axial end 216. The front axial end 214 is nearer to the inlet line 206 than the rear axial end 216. The shear mixer 212 is positioned between the front axial end 214 and the cylinder inlet end cap 250. A position of the shear mixer 212 between the front axial 214 and the inner cylinder inlet end cap 250 is adjustable. For example, the shear mixer 212 can be positioned to abut against the front axial end 214 or be positioned to be spaced apart from the front axial end 214 or be extended into the inlet cylinder cavity 257 at variable distances up to the cylinder inlet end cap 250. The shear mixer 212 can implement at least one of a low speed propeller, a high speed open-disc saw blade, or a high shear rotor. The operational conditions of the shear mixer 212 can depend on the properties of the sample multi-phase fluid. For example, the shear mixer 212 can have a rotational speed ranging between substantially 1 meter (3 feet) per minute to substantially 1219 meters (4,000 feet) per minute or for example, substantially 3,3 meters (11 feet) per minute to substantially 5486 meters (18,000 feet) per minute.

As described below and shown in FIGS. 2F and 2G, the shear mixer 212 includes a rotor 274 and a stator 275 arranged to define a fluid passage. A rotary shear blade 276 is attached to the rotor 274. For example, the rotor shaft 273 is connected to the rotary shear blade 276. The rotor shaft 273 passes through the piston assembly 208 and extends through the cylinder back pressure cavity and out the cylinder outlet end cap 255. All pressure sensitive drive shaft connections are secured through rotary shaft seals. A controller 246 is connected to the drive shaft 218. The controller 246 can include or be connected to a power source (not shown) to provide power to rotate the rotor through the rotor shaft 273 (and, in turn, the rotary shear blade) and the stator relative to each other. By doing so, the shear mixer 212 is configured to shear the sample multi-phase fluid 204 such that a homogeneity distribution of multiple phases in the sample multi-phase fluid 204 remain substantially constant over time.

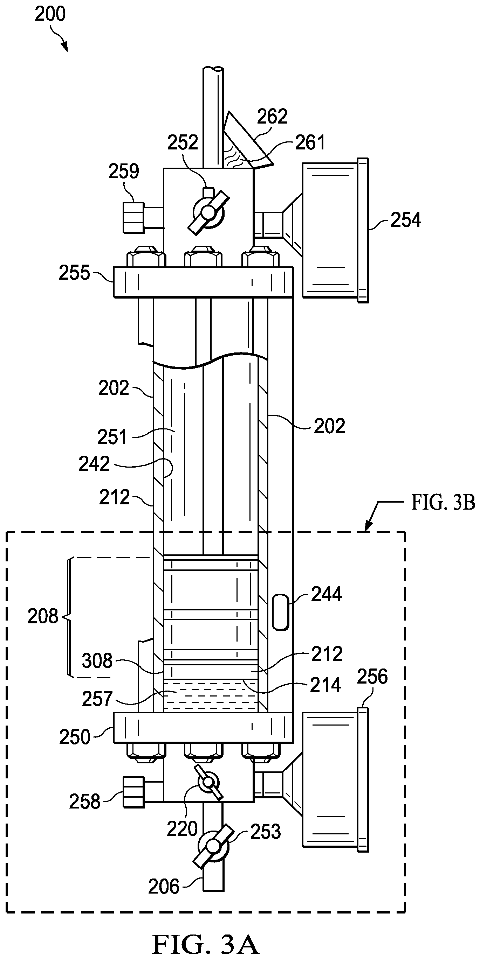

FIGS. 3A-3C are schematic diagrams of the fluid sampling container 200 having the shear mixer 212 abutting the piston assembly 208. FIG. 3A is a schematic diagram in which the piston assembly 208 is at the pre-sampling position with the piston assembly 208 and the shear mixer 212 as close as possible to the cylinder inlet end cap 250. In this position, the container 200 can draw the sample multi-phase fluid into the inlet cylinder cavity 257. The minimal deadspace 308 between the piston assembly 208 and the cylinder inlet end cap 250 can be purged by venting the sample through valve 220 into a collection can (not shown). The minimal deadspace 308 is part of the cylinder cavity 257 and is the physical space between the internal front of the cylinder and the face of the piston. Any fluid in the minimal deadspace 308 can be flushed prior to collecting sample through the purge valve to eliminate any vapor or residual gases remaining from the prior sampling. After sufficient time is allowed to purge the deadspace volume and fill the void area with sample multi-phase fluid, the purge valve 220 is closed.

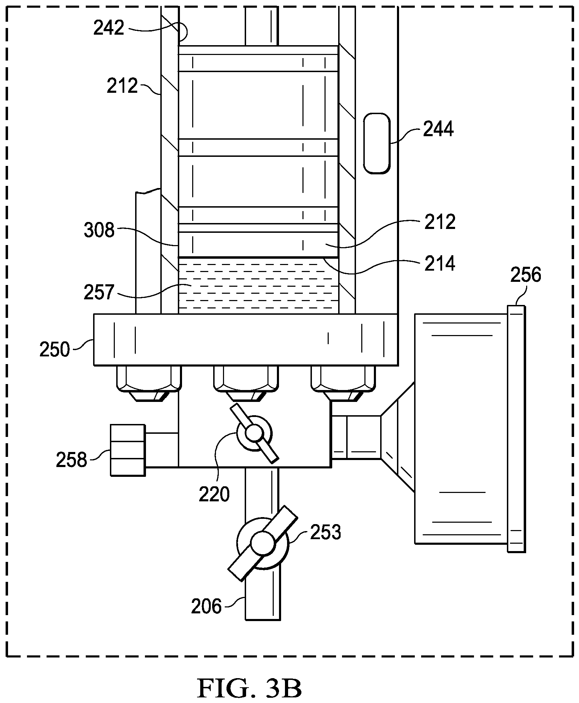

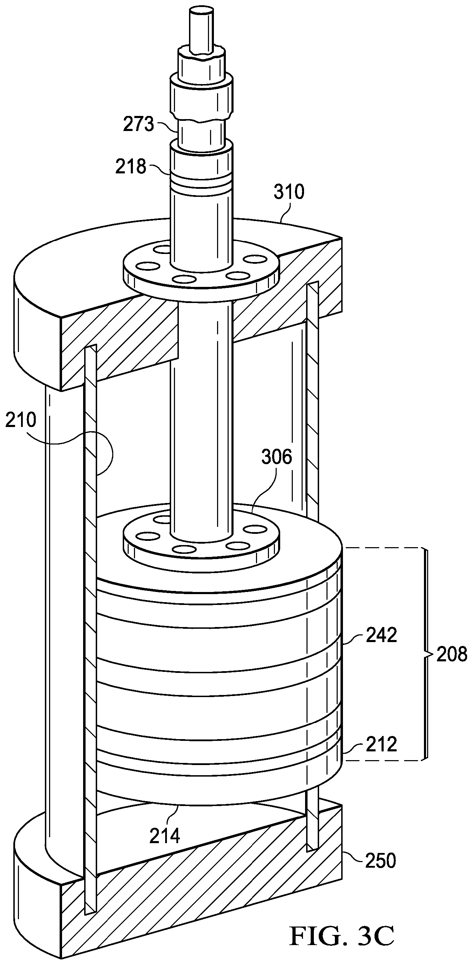

The shear mixer 212 is abutted against cylinder inlet end cap 250 and is flush facing to the front axial end 214 of the piston assembly 208, as shown in FIG. 3B and FIG. 3C. FIG. 3C shows a rotational bearing 306 positioned within the piston assembly 208 and at the cylinder outlet end cap. The drive shaft 218 is passed through the rotational bearing 306. The shear mixer 212 is connected to an end of the rotor shaft 273. The position of the shear mixer 212 between the front axial end 214 and the inlet end cap 250 can be manipulated by adjusting (for example, pushing or pulling) the rotor shaft 273 within the housing 310. In some implementations, manipulation of the shear mixer 212 can be through a motorized drive shaft integrated with the wireless receiver assembly 261. In such implementations, the wireless receiver assembly 261 can include a motion sensor assembly.

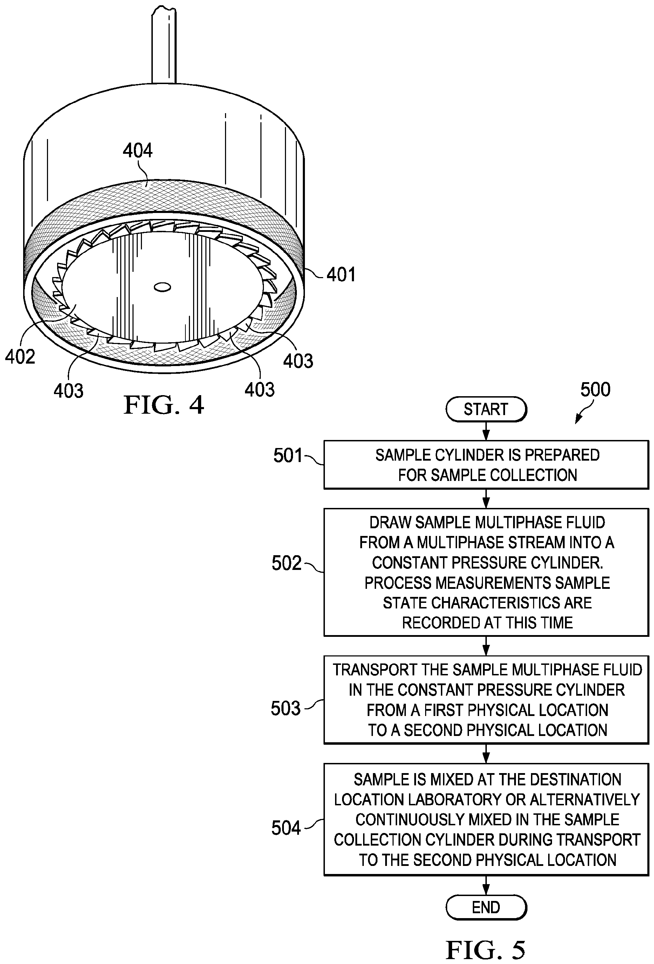

In some implementations, as shown in FIG. 4, an inner diameter of the stator 401 can be greater than an outer diameter of the rotary shear blade 402. In addition, the rotary shear blade 402 can include multiple circumferential blades 403. The stator 401 can include a mesh screen 404 attached to a circumferential surface of the stator 401. The mesh screen 404 can include multiple passages (for example, through holes or other passages) that extend from the inner wall to the outer wall of the stator. The sample multi-phase fluid can enter the fluid passage defined by the rotor blade 402 and pass through the stator 401. The clearance gap between the rotor and stator forms a high shear zone for the material as it exits the rotor.

FIG. 5 is a flowchart of an example of a process 500 for transporting a sample multi-phase fluid in a fluid sampling container. In some implementations, a controller, for example, the controller 246, can implement at least a few process steps of the process 500. The controller can be implemented as an analog or digital processing circuitry or a combination of them. Alternatively, or in addition, the controller can be implemented as a computer system including a computer-readable medium storing instructions executable by one or more processors to perform some of the process steps described in process 500. The controller can be implemented as firmware, hardware, software, or combinations of them.

At 501, the pressure cylinder is prepared for sampling. For example, the outlet cavity is back pressured to a pressure exceeding the line pressure from which the sample will be collected. By opening the inlet purge valve, the piston will travel to the inlet cylinder cap at the front of the cylinder. The purge valve and sample inlet valves are closed and the backpressure valves used to charge the cylinder are also closed.

At 502, sample multi-phase fluid is drawn from a multi-phase stream. For example, during sampling, the cylinder is connected directly to the sample tap, fast loop connection piping, or tubing. The sample tap valve is opened and the dead volume of the sample line and cylinder inlet sample cavity is purged. This is accomplished by opening the inlet sample valve and flushing the system through the inlet purge valve into a waste collection container until the line and cylinder deadspace volume is confirmed to be adequately flushed. The purge valve is now closed and the inlet sample cavity will increase to line pressure. The sample cylinder backpressure is slowly reduced through the backpressure valve, allowing the piston to slowly travel backward to the cylinder end cap, filling the inlet sample cavity volume with sample. The back pressure purge valve is closed when 80% of the cylinder sample volume or less is reached by the floating piston and the inlet sample valve is closed. The sample temperature, pressure, and piston shaft position are recorded manually from local display or automatically recorded in the local system memory temperature and pressure systems or recorded electronically from the end caps may be screwed into the inlet and backpressure valves for transport. While the process is envisioned to be a manual operation, the system can be automated through the controller 246 by opening the inlet line and releasing the precharge backpressure to draw the sample multi-phase fluid into the container 200.

At 503, the sample multi-phase fluid, for example, sample hydrocarbons drawn from a hydrocarbon stream or sample process streams drawn from source process streams, can be transported from a physical location in which they are collected to a laboratory for testing. The sample can be returned to sample process conditions by heating the cylinder to the original line temperature using the integrated heating coils or through external means. This will return the piston position to the original noted location and bring the sample cylinder back to the original line conditions. Once the original physical line conditions have been satisfied, the sample can be mixed using the internal shear mixer for homogenization. At 503, while the system is envisioned to be mixed at the destination facility, the internal mixing elements can continuously mix the sample multi-phase fluid in a closed environment during transportation to maintain the homogeneity of the sample during the duration of transportation.

At 504, the sample multi-phase fluid is mixed in the container using a shear mixer positioned in the container. For example, the controller 246 can control the shear mixer 212 to shear the sample multi-phase fluid 204 such that a homogeneity of multiple phases in the sample multi-phase fluid 204 remain substantially constant over time. The controller 246 can be configured, for example, by an operator, to operate the shear mixer 212 at different operational conditions (for example, rotation, speed, duration, or other operational conditions). Based on the properties of the sample multi-phase fluid (for example, viscosity, pressure, vapor pressure, physical properties, or other properties), the controller 246 can be controlled to select a set of operational conditions under which the sample multi-phase fluid can be continuously mixed. For example, the operational conditions of the shear mixer 212 can be varied based on the sample multi-phase fluid properties to satisfy Section 8.3 (Standard Practice for Mixing and Handling of Liquid Samples of Petroleum and Petroleum Products) or Appendix B.4 (Acceptance Criteria for Insertion Mixers) of the American Petroleum Institute (API) Manual of Petroleum Measurement Standards (MPMS).

As the shear mixer 212 is an internal mixing element of a constant pressure fluid sampling container, mixing of the sample multi-phase fluid occurs in a closed system of original volume, pressure and temperature. Consequently, there will be no loss of material, no change in phase from liquid to vapor, and no loss of volatile components. Such mixing in a closed system in a steady state avoids three problems associated with such mixing - loss of water through water vapor, loss of light ends phases. In addition, the use of the shear mixer 212 can homogenize any emulsion phases and ensure uniform droplet size throughout the sample matrix. Moreover, the compositional volume of the sample multi-phase fluid remains substantially constant over time. Therefore, the original sampled pressure and volume can be re-established at a duration after the sample has been collected. For example, the original sample temperature can be returned by controlled heating of the sample cylinder in an oven, water bath, or electrically controlled heating assembly.

At 505, the sample multi-phase fluid is transported in the fluid sample container from a first physical location to a second physical location. As described above, the sample multi-phase fluid, for example, sample hydrocarbons drawn from a hydrocarbon stream or sample process streams drawn from source process streams, can be transported from a physical location in which they are collected to a laboratory for testing. The internal mixing elements can continuously mix the sample multi-phase fluid in a closed environment during transportation to maintain the homogeneity of the sample during the duration of transportation.

## Claims

1. A fluid sampling container (200) comprising:
a sealed outer body (202) configured to hold a sample multi-phase fluid (204) obtained from a multi-phase fluid stream;
an inlet line (206) attached to the outer body, wherein the sample multi-phase fluid flows into the sealed outer body through the inlet line;
a piston assembly (208) positioned within the sealed outer body, the piston assembly sealed to inner walls (210) of the outer body to define a sample volume in which the sample multi-phase fluid is contained; said fluid sampling container (200) being **characterized in that** it comprises
a shear mixer (212) positioned within the sealed outer body, the shear mixer comprising a rotor (274) and a stator (275, 201) arranged to define a fluid passage and rotatable relative to each other, the rotor comprising a rotary shear blade (276, 402) configured to shear the sample multi-phase fluid flowing through the fluid passage, the shear mixer configured to shear the sample multi-phase fluid such that a homogeneity of multiple phases in the sample multi-phase fluid remains substantially constant over time.

2. The container of claim 1, wherein the piston assembly comprises a front axial end (214) and a rear axial end (216), the front axial end nearer to the inlet line than the rear axial end, and wherein the shear mixer is positioned between the front axial end and the inlet line, and optionally wherein the stator is a hollow, stationary stator within which the rotary shear blade is positioned, and wherein the rotor is rotatable to rotate the rotary shear blade within the hollow, stationary stator.

3. The container of claim 2, further comprising a drive shaft (273) to rotate the rotary shear blade, the drive shaft passing through the piston assembly and extending outside the outer body.

4. The container of claim 2, wherein the stator comprises a mesh screen (404) attached to a circumferential surface of the stator, wherein the sample multi-phase fluid sheared by the rotary shear blade in the fluid passage exits the shear mixer through the mesh screen.

5. The container of claim 2, wherein a position of the shear mixer between the piston assembly and the inlet line is adjustable.

6. The container of claim 2, wherein the position of the shear mixer is adjustable to be abutted against the front axial end of the piston assembly or be spaced apart from the front axial end of the piston assembly, and optionally further comprising a housing (310), wherein the piston assembly and the shear mixer are positioned within the housing.

7. The container of claim 2, wherein the piston assembly comprises:
a floating piston (240);
a magnetic ring (242) attached to a circumference of the floating piston; and
a magnetic tracker (244) attached to an outside surface of the outer body, the magnetic tracker configured to track a position of the floating piston within the outer body.

8. The container of claim 2, further comprising a temperature detector connected to the piston assembly, the temperature detector configured to determine a temperature of the sample multi-phase fluid and to provide the determined temperature as a wireless signal to a display and storage unit.

9. The container of claim 1, further comprising heating coils (280) mounted to an exterior of the sealed outer body, the heating coils configured to heat the sample multi-phase fluid.

10. The container of claim 1, further comprising one or more of:
an inlet end cap (250) through which the inlet line is attached to the outer body, and optionally an inlet pressure gauge (256) connected to the inlet end cap, the inlet pressure gauge comprising a wireless transmitter configured to transmit a pressure measured by the inlet pressure gauge;
and optionally a display unit configured to receive and display the pressure transmitted by the wireless transmitter.

11. The container of claim 1, further comprising a purge line attached to the outer body, wherein contents of the sealed outer body are purged through the purge line before the sample multi-phase fluid flows into the sealed outer body through the inlet line.

12. The container of claim 1, wherein the multi-phase fluid stream comprises hydrocarbons drawn from a hydrocarbon reservoir and wherein the sample multi-phase fluid comprises aqueous and hydrocarbon liquids.

13. The container of claim 1, further comprising a controller (246) connected to the shear mixer, the controller configured to operate the shear mixer to continuously mix the sample multi-phase fluid at mixing conditions at which the homogeneity of multiple phases in the sample multi-phase fluid remains substantially constant over time; and optionally wherein the controller is configured to operate the shear mixer to continuously mix the sample multi-phase fluid at the mixing conditions such that a cumulative distribution of the multiple phases in the sample multi-phase fluid volume remains substantially constant over time.

14. The container of claim 1, wherein the container at least partially filled with the sample multi-phase fluid is portable from a first physical location (120) to a second physical location (122).

15. A method comprising:
at least partially filling a fluid container (200) with a sample multi-phase fluid drawn from a multi-phase fluid stream, the fluid container comprising:
a sealed outer body configured to hold the sample multi-phase fluid;
an inlet line attached to the outer body, wherein the sample multi-phase fluid flows into the sealed outer body through the inlet line;
a piston assembly positioned within the sealed outer body, the piston assembly sealed to inner walls of the outer body to define a sample volume in which the sample multi-phase fluid is contained; and
a shear mixer positioned within the sealed outer body, the shear mixer comprising a rotor and a stator arranged to define a fluid passage and rotatable relative to each other, the rotor comprising a rotary shear blade configured to shear the sample multi-phase fluid flowing through the fluid passage, the shear mixer configured to shear the sample multi-phase fluid such that a homogeneity of multiple phases in the sample multi-phase fluid remains substantially constant over time; and

16. The method of claim 15, wherein the fluid container (200) is portable from a first physical location at which the sample multi-phase fluid is collected to a second physical location to which the sample multi-phase fluid is delivered, and wherein the shear mixer is operated to mix the sample multi-phase fluid such that a concentration of each multi-phase component in the sample multi-phase fluid at the first physical location is substantially equal to a concentration of each multi-phase component in the sample multi-phase fluid at the second physical location.

17. The method of claim 15, wherein the multi-phase fluid stream comprises hydrocarbons drawn from a hydrocarbon reservoir and wherein the sample multi-phase fluid comprises aqueous and hydrocarbon liquids.

## Patentansprüche

1. Fluidprobenahmebehälter (200), umfassend:
einen abgedichteten äußeren Körper (202), der ausgestaltet ist, um ein mehrphasiges Probenfluid (204) zu fassen, das aus einem mehrphasigen Fluidstrom erhalten wird;
eine Einlassleitung (206), die an dem äußeren Körper befestigt ist, wobei das mehrphasige Probenfluid durch die Einlassleitung hindurch in den abgedichteten äußeren Körper fließt;
eine Kolbenbaugruppe (208), die innerhalb des abgedichteten äußeren Körpers positioniert ist, wobei die Kolbenbaugruppe gegen die inneren Wände (210) des äußeren Körpers abgedichtet ist, um ein Probenvolumen zu definieren, in welchem das mehrphasige Probenfluid enthalten ist; wobei der Fluidprobenahmebehälter (200) **dadurch gekennzeichnet ist, dass** er umfasst
einen Schermischer (212), der innerhalb des abgedichteten äußeren Körpers positioniert ist, wobei der Schermischer einen Rotor (274) und einen Stator (275, 201) umfasst, die angeordnet sind, um einen Fluiddurchgang zu definieren und relativ zueinander drehbar sind, wobei der Rotor ein Rotorschermesser (276, 402) umfasst, das ausgestaltet ist, um das mehrphasige Probenfluid, welches durch den Fluiddurchgang fließt, zu scheren, wobei der Schermischer ausgestaltet ist, um das mehrphasige Probenfluid zu scheren, so dass eine Homogenität der mehreren Phasen in dem mehrphasigen Probenfluid im Zeitverlauf konstant bleibt.

2. Behälter nach Anspruch 1, wobei die Kolbenbaugruppe ein vorderes axiales Ende (214) und ein hinteres axiales Ende (216) umfasst, wobei das vordere axiale Ende näher an der Einlassleitung liegt als das hintere axiale Ende, und wobei der Schermischer zwischen dem vorderen axialen Ende und der Einlassleitung positioniert ist, und wobei der Stator gegebenenfalls ein hohler stationärer Stator ist, innerhalb dessen das Rotorschermesser positioniert ist, und wobei der Rotor drehbar ist, um das Rotorschermesser innerhalb des hohlen stationären Stators zu drehen.

3. Behälter nach Anspruch 2, des Weiteren umfassend eine Antriebswelle (273), um das Rotorschermesser zu drehen, wobei die Antriebswelle durch die Kolbenbaugruppe führt und sich außerhalb des äußeren Körpers erstreckt.

4. Behälter nach Anspruch 2, wobei der Stator ein Maschensieb (404) umfasst, das an einer Umfangoberfläche des Stators befestigt ist, wobei das mehrphasige Probenfluid, welches durch das Rotorschermesser in dem Fluiddurchgang geschert wird, den Schermischer durch das Maschensieb verlässt.

5. Behälter nach Anspruch 2, wobei eine Position des Schermischers zwischen der Kolbenbaugruppe und der Einlassleitung anpassbar ist.

6. Behälter nach Anspruch 2, wobei die Position des Schermischers anpassbar ist, so dass dieser an dem vorderen axialen Ende der Kolbenbaugruppe anliegen kann oder von dem vorderen axialen Ende der Kolbenbaugruppe beabstandet sein kann, und der gegebenenfalls des Weiteren ein Gehäuse (310) umfasst, wobei die Kolbenbaugruppe und der Schermischer innerhalb des Gehäuses positioniert sind.

7. Behälter nach Anspruch 2, wobei die Kolbenbaugruppe umfasst:
einen schwimmenden Kolben (240);
einen magnetischen Ring (242), der an einem Umfang des schwimmenden Kolbens befestigt ist; und
einen magnetischen Tracker (244), der an einer Außenseitenoberfläche des äußeren Körpers befestigt ist, wobei der magnetische Tracker ausgestaltet ist, um eine Position des schwimmenden Kolbens innerhalb des äußeren Körpers zu verfolgen.

8. Behälter nach Anspruch 2, des Weiteren umfassend einen Temperaturdetektor, der mit der Kolbenbaugruppe verbunden ist, wobei der Temperaturdetektor ausgestaltet ist, um eine Temperatur des mehrphasigen Probenfluids zu ermitteln und die ermittelte Temperatur als Drahtlossignal an eine Anzeige und Speichereinheit bereitzustellen.

9. Behälter nach Anspruch 1, des Weiteren umfassend Heizspiralen (280), die an einer Außenseite des abgedichteten äußeren Körpers montiert sind, wobei die Heizspiralen ausgestaltet sind, um das mehrphasige Probenfluid zu heizen.

10. Behälter nach Anspruch 1, des Weiteren umfassend ein oder mehrere von:
einer Einlassendkappe (250), durch welche die Einlassleitung an dem äußeren Körper befestigt wird, und gegebenenfalls ein Einlassdruckmessgerät (256), das mit der Einlassendkappe verbunden ist, wobei das Einlassdruckmessgerät einen Drahtlossender umfasst, der ausgestaltet ist, um einen Druck zu übermitteln, der durch das Einlassdruckmessgerät gemessen wurde;
und gegebenenfalls eine Anzeigeeinheit, die ausgestaltet ist, um den durch den Drahtlossender übermittelten Druck zu empfangen und anzuzeigen.

11. Behälter nach Anspruch 1, des Weiteren umfassend eine Spülleitung, die an dem äußeren Körper befestigt ist, wobei der Inhalt des abgedichteten äußeren Körpers durch die Spülleitung ausgespült wird, bevor das mehrphasige Probenfluid durch die Einlassleitung hindurch in den abgedichteten äußeren Körper fließt.

12. Behälter nach Anspruch 1, wobei der mehrphasige Fluidstrom Kohlenwasserstoffe umfasst, die aus einem Kohlenwasserstoffreservoir gezogen wurden, und wobei das mehrphasige Probenfluid wässrige und Kohlenwasserstoffflüssigkeiten umfasst.

13. Behälter nach Anspruch 1, des Weiteren umfassend eine Steuerung (246), die mit dem Schermischer verbunden ist, wobei die Steuerung ausgestaltet ist, um den Schermischer so zu betreiben, dass das mehrphasige Probenfluid unter Mischbedingungen kontinuierlich gemischt wird, bei denen die Homogenität der mehreren Phasen in dem mehrphasigen Probenfluid im Zeitverlauf im Wesentlichen konstant bleibt; und wobei gegebenenfalls die Steuerung ausgestaltet ist, um den Schermischer so zu betreiben, dass das mehrphasige Probenfluid unter den Mischbedingungen kontinuierlich gemischt wird, so dass eine kumulative Verteilung der mehreren Phasen in dem mehrphasigen Probenfluidvolumen im Zeitverlauf im Wesentlichen konstant bleibt.

14. Behälter nach Anspruch 1, wobei der Behälter, der mindestens teilweise mit dem mehrphasigen Probenfluid gefüllt ist, von einem ersten physischen Ort (120) an einen zweiten physischen Ort (122) transportabel ist.

15. Verfahren, umfassend:
mindestens teilweise Füllen eines Fluidbehälters (200) mit einem mehrphasigen Probenfluid, das aus einem mehrphasigen Fluidstrom gezogen worden ist, wobei der Fluidbehälter umfasst:
einen abgedichteten äußeren Körper, der ausgestaltet ist, um das mehrphasige Probenfluid zu fassen;
eine Einlassleitung, die an dem äußeren Körper befestigt ist, wobei das mehrphasige Probenfluid durch die Einlassleitung in den abgedichteten äußeren Körper fließt;
eine Kolbenbaugruppe, die innerhalb des abgedichteten äußeren Körpers positioniert ist, wobei die Kolbenbaugruppe gegen innere Wände des äußeren Körpers abgedichtet ist, um ein Probenvolumen zu definieren, in dem das mehrphasige Probenfluid enthalten ist; und
einen Schermischer, der innerhalb des abgedichteten äußeren Körpers positioniert ist, wobei der Schermischer einen Rotor und einen Stator umfasst, die angeordnet sind, um einen Fluiddurchgang zu definieren und relativ zueinander drehbar sind, wobei der Rotor ein Rotorschermesser umfasst, das ausgestaltet ist, um das mehrphasige Probenfluid, welches durch den Fluiddurchgang fließt, zu scheren, wobei der Schermischer ausgestaltet ist, um das mehrphasige Probenfluid zu scheren, so dass eine Homogenität der mehreren Phasen in dem mehrphasigen Probenfluid im Zeitverlauf konstant bleibt; und
Betreiben des Schermischers, um das mehrphasige Probenfluid zu mischen, so dass eine Homogenität der mehreren Phasen in dem mehrphasigen Probenfluid im Zeitverlauf im Wesentlichen konstant bleibt.

16. Verfahren nach Anspruch 15, wobei der Fluidbehälter (200) von einem ersten physischen Ort, an dem das mehrphasige Probenfluid gesammelt wurde, zu einem zweiten physischen Ort transportierbar ist, an den das mehrphasige Probenfluid abgegeben wird, und wobei der Schermischer betrieben wird, um das mehrphasige Probenfluid so zu mischen, dass eine Konzentration von jeder mehrphasigen Komponente in dem mehrphasigen Probenfluid an dem ersten physischen Ort im Wesentlichen gleich einer Konzentration von jeder mehrphasigen Komponente in dem mehrphasigen Probenfluid an dem zweiten physischen Ort ist.

17. Verfahren nach Anspruch 15, wobei der mehrphasige Fluidstrom Kohlenwasserstoffe umfasst, die aus einem Kohlenwasserstoffreservoir gezogen wurden, und wobei das mehrphasige Probenfluid wässrige und Kohlenwasserstoffflüssigkeiten umfasst.

## Revendications

1. Récipient d'échantillonnage de fluide (200) comprenant :
un corps externe scellé (202) configuré pour contenir un fluide multiphasique échantillonné (204) obtenu à partir d'un courant de fluide multiphasique ;
une conduite d'entrée (206) attachée au corps externe, le fluide multiphasique échantillonné s'écoulant à l'intérieur du corps externe scellé par la conduite d'entrée ;
un ensemble piston (208) positionné à l'intérieur du corps externe scellé, l'ensemble piston étant scellé sur des parois internes (210) du corps externe pour définir un volume d'échantillon dans lequel le fluide multiphasique échantillonné est contenu ; ledit récipient d'échantillonnage de fluide (200) étant **caractérisé en ce qu'**il comprend
un mélangeur à cisaillement (212) positionné à l'intérieur du corps externe scellé, le mélangeur à cisaillement comprenant un rotor (274) et un stator (275, 201) agencés pour définir un passage de fluide et rotatifs l'un par rapport à l'autre, le rotor comprenant une lame de cisaillement rotative (276, 402) configurée pour cisailler le fluide multiphasique échantillonné s'écoulant à travers le passage de fluide, le mélangeur à cisaillement étant configuré pour cisailler le fluide multiphasique échantillonné de telle sorte qu'une homogénéité de multiples phases dans le fluide multiphasique échantillonnée reste sensiblement constante dans le temps.

2. Récipient de la revendication 1, dans lequel l'ensemble piston comprend une extrémité axiale avant (214) et une extrémité axiale arrière (216), l'extrémité axiale avant étant plus proche de la conduite d'entrée que l'extrémité axiale arrière, et dans lequel le mélangeur à cisaillement est positionné entre l'extrémité axiale avant et la conduite d'entrée, et éventuellement dans lequel le stator est un stator creux, stationnaire à l'intérieur duquel est positionnée la lame de cisaillement rotative, et dans lequel le rotor est rotatif pour faire tourner la lame de cisaillement rotative à l'intérieur du stator creux stationnaire.

3. Récipient de la revendication 2, comprenant en outre un arbre d'entraînement (273) pour faire tourner la lame de cisaillement rotative, l'arbre d'entraînement passant à travers l'ensemble piston et s'étendant à l'extérieur du corps externe.

4. Récipient de la revendication 2, dans lequel le stator comprend un tamis à mailles (404) attaché à une surface circonférentielle du stator, le fluide multiphasique échantillonné cisaillé par la lame de cisaillement rotative dans le passage de fluide sortant du mélangeur à cisaillement par le tamis à mailles.

5. Récipient de la revendication 2, dans lequel une position du mélangeur à cisaillement entre l'ensemble piston et la conduite d'entrée est réglable.

6. Récipient de la revendication 2, dans lequel la position du mélangeur à cisaillement est réglable pour qu'il soit mis en butée contre l'extrémité axiale avant de l'ensemble piston ou espacé de l'extrémité axiale avant de l'ensemble piston, et comprenant en outre éventuellement un boîtier (310), l'ensemble piston et le mélangeur à cisaillement étant positionnés à l'intérieur du boîtier.

7. Récipient de la revendication 2, dans lequel l'ensemble piston comprend :
un piston flottant (240) ;
une bague magnétique (242) attachée à une circonférence du piston flottant ; et
un dispositif de suivi magnétique (244) attaché à une surface extérieure du corps externe, le dispositif de suivi magnétique étant configuré pour suivre une position du piston flottant à l'intérieur du corps externe.

8. Récipient de la revendication 2, comprenant en outre un détecteur de température relié à l'ensemble piston, le détecteur de température étant configuré pour déterminer une température du fluide multiphasique échantillonné et pour fournir la température déterminée sous la forme d'un signal sans fil à un écran et une unité de stockage.

9. Récipient de la revendication 1, comprenant en outre des serpentins de chauffage (280) montés sur un extérieur du corps externe scellé, les serpentins de chauffage étant configurés pour chauffer le fluide multiphasique échantillonné.

10. Récipient de la revendication 1, comprenant en outre un ou plusieurs des éléments suivants :
un embout d'entrée (250) par lequel la conduite d'entrée est attachée au corps externe, et éventuellement un manomètre d'entrée (256) relié à l'embout d'entrée, le manomètre d'entrée comprenant un émetteur sans fil configuré pour transmettre une pression mesurée par le manomètre d'entrée ;
et éventuellement une unité d'affichage configurée pour recevoir et afficher la pression transmise par l'émetteur sans fil.

11. Récipient de la revendication 1, comprenant en outre une conduite de purge attachée au corps externe, le contenu du corps externe scellé étant purgé par la conduite de purge avant que le fluide multiphasique échantillonné s'écoule à l'intérieur du corps externe scellé par la conduite d'entrée.

12. Récipient de la revendication 1, dans lequel le courant de fluide multiphasique comprend des hydrocarbures extraits d'un réservoir d'hydrocarbures et dans lequel le fluide multiphasique échantillonné comprend des liquides aqueux et hydrocarbonés.

13. Récipient de la revendication 1, comprenant en outre un dispositif de commande (246) relié au mélangeur à cisaillement, le dispositif de commande étant configuré pour faire fonctionner le mélangeur à cisaillement pour mélanger en continu le fluide multiphasique échantillonné dans des conditions de mélange dans lesquelles l'homogénéité de multiples phases dans le fluide multiphasique échantillonnée reste sensiblement constante dans le temps ; et éventuellement dans lequel le dispositif de commande est configuré pour faire fonctionner le mélangeur à cisaillement pour mélanger en continu le fluide multiphasique échantillonné dans les conditions de mélange de telle sorte qu'une répartition cumulée des multiples phases dans le volume de fluide multiphasique échantillonné reste sensiblement constante dans le temps.

14. Récipient de la revendication 1, le récipient au moins partiellement rempli avec le fluide multiphasique échantillonné étant transportable d'un premier emplacement physique (120) à un deuxième emplacement physique (122).

15. Procédé comprenant :
le remplissage au moins partiel d'un récipient de fluide (200) avec un fluide multiphasique échantillonné extrait d'un courant de fluide multiphasique, le récipient de fluide comprenant :
un corps externe scellé configuré pour contenir le fluide multiphasique échantillonné ;
une conduite d'entrée attachée au corps externe, le fluide multiphasique échantillonné s'écoulant à l'intérieur du corps externe scellé par la conduite d'entrée ;
un ensemble piston positionné à l'intérieur du corps externe scellé, l'ensemble piston étant scellé sur des parois internes du corps externe pour définir un volume d'échantillon dans lequel le fluide multiphasique échantillonné est contenu ; et
un mélangeur à cisaillement positionné à l'intérieur du corps externe scellé, le mélangeur à cisaillement comprenant un rotor et un stator agencés pour définir un passage de fluide et rotatifs l'un par rapport à l'autre, le rotor comprenant une lame de cisaillement rotative configurée pour cisailler le fluide multiphasique échantillonné s'écoulant à travers le passage de fluide, le mélangeur à cisaillement étant configuré pour cisailler le fluide multiphasique échantillonné de telle sorte qu'une homogénéité de multiples phases dans le fluide multiphasique échantillonnée reste sensiblement constante dans le temps ; et
le fonctionnement du mélangeur à cisaillement pour mélanger le fluide multiphasique échantillonné de telle sorte qu'une homogénéité de multiples phases dans le fluide multiphasique échantillonnée reste sensiblement constante dans le temps.

16. Procédé de la revendication 15, dans lequel le récipient de fluide (200) est transportable d'un premier emplacement physique auquel le fluide multiphasique échantillonné est collecté à un deuxième emplacement physique auquel le fluide multiphasique échantillonné est distribué, et dans lequel le mélangeur à cisaillement est actionné pour mélanger le fluide multiphasique échantillonné de telle sorte qu'une concentration de chaque constituant multiphasique dans le fluide multiphasique échantillonné au premier emplacement physique est sensiblement égale à une concentration de chaque constituant multiphasique dans le fluide multiphasique échantillonné au deuxième emplacement physique.

17. Procédé de la revendication 15, dans lequel le courant de fluide multiphasique comprend des hydrocarbures extraits d'un réservoir d'hydrocarbures et dans lequel le fluide multiphasique échantillonné comprend des liquides aqueux et hydrocarbonés.
